# EUROPÄISCHE PATENTSCHRIFT

(11) **EP 1 084 073 B1**
(45) Veröffentlichungstag und Bekanntmachung des Hinweises auf die Patenterteilung: **12.03.2003**
(21) Anmeldenummer: 99920601.4
(22) Anmeldetag: 07.04.1999
(51) Int. Cl.: B65H 20/34, B21C 49/00

(54) **VERTIKALBANDSPEICHER**
VERTICAL BELT STORAGE SYSTEM
SYSTEME DE STOCKAGE A BANDE VERTICALE

(30) Priorität: 09.04.1998 DE 19816057
(43) Veröffentlichungstag der Anmeldung: 21.03.2001
(73) Patentinhaber: SMS SCHLOEMANN-SIEMAG AKTIENGESELLSCHAFT, 40237 Düsseldorf (DE)
(72) Erfinder: DE KOCK, Peter, D-46117 Oberhausen (DE); SOHL, Ralf-Hartmut, D-42697 Solingen (DE); DIEKMANN, Christoph, D-46145 Oberhausen (DE); BACHMANN, Uwe, D-46539 Dinslaken (DE)
(74) Vertreter: Valentin, Ekkehard, Dipl.-Ing.
(86) Internationale Anmeldenummer: EP9902341
(87) Internationale Veröffentlichungsnummer: WO99052804

(56) Entgegenhaltungen:
- EP-A- 0 773 074
- EP-A- 0 844 204
- DE-U- 29 521 303
- US-A- 3 414 208
- US-A- 3 841 545

## Beschreibung

Die Erfindung betrifft einen Vertikalbandspeicher, umfassend eine Tragkonstruktion für einen über Seile nach Art eines Flaschenzuges heb- und senkbaren, mit einem Gegengewicht versehenen Speicherwagen, der mit Umlenkrollen ausgerüstet ist, die im Zusammenspiel mit fundamentseitigen stätionären Umlenkrollen das ein- und/oder auslaufende Band umlenken und führen.

In Bandbehandlungsanlagen, wie beispw. für eine kombinierte Durchlaufglüh- und Behandlungsanlage für Kaltband durch die Zeitschrift "Stahl u. Eisen 103 (1983) Nr. 9, Seiten 435 bis 440" bekanntgeworden, werden zur Überbrückung der Stillstandzeiten des Ein- und Auslaufteils der Anlage derartige Bandspeicher eingesetzt. Diese sind in der Lage, durch Schlingenbildung ein Band bzw. einen Bandvorrat aufzunehmen, um den kontinuierlich arbeitenden Behandlungsteil während der Bundwechsel im Einlauf und im Auslauf zu ermöglichen. Es wird dabei einerseits nach sogenannten Horizontalspeichem und andererseits nach sogenannten Vertikalspeichern bzw. Vertikalschlingenspeichern unterschieden.

Die eingangs genannten Vertikalspeicher, wie Z.B. in der DE 295 21303 A offenbart, werden üblicherweise in einer Stahl-Tragkonstruktion nach Art eines Förderturms ausgeführt; der bewegliche Speicherwagen wird innerhalb der Tragkonstruktion geführt, d.h. er -stützt sich mit Führungen an der Turm-Innenseite ab. Die Gegengewichte sind außen angeordnet. Diese bekannte Stahl-Tragkonstruktion erfordert aufgrund der ungünstigen Krafteinleitung für die Wagenführung, den Wagenantrieb und die Führung der Ausgleichsgewichte eine relativ schwere und sperrige Bauweise.

Ein weiterer Vertikalspeicher mit einem U- förmigen Tragrahmen wird in der US 3414208 A offenbart.

Der Erfindung liegt daher die Aufgabe zugrunde, einen gattungsgemäßen Vertikalbandspeicher einfacher und zweckmäßiger zu gestalten.

Diese Aufgabe wid erfindungsgemäß dadurch gelöst, daß die Tragkonstruktion als Säule und der Speicherwagen als an deren Außenfläche laufendes Ausladerfahrzeug ausgebildet ist Es läßt sich hierdurch eine sehr kompakte Ausführung des

Vertikalspeichers erreichen, zudem verbunden mit einem erheblichen Fertigunsvorteil, da die Säule in der Hersteller-Werkstatt vorgefertigt und ausgerichtet werden kann. Im Vergleich zu einem konventionellen Bandspeicher verkürzen sich dadurch die Montagezeiten. Außerdem läßt sich der vorzugsweise diametrale Ausladerrahmen aufweisende, d.h. beidseitig ausladend ausgebildete Speicherwagen durch einfache Anpassungen so verändern, daß der Vertikalspeicher in der Kapazität beliebig verändert werden kann, was bei den bekannten Vertikalspeichem aufgrund der geschlossenen Bauweise nicht möglich ist. Denn bei der Erfindung läßt sich die Anzahl der in den Ausladerrahmen angeordneten Umlenkrollen durch einfaches Verlängern bzw. Verkürzen des Rahmengestells entsprechend erweitern bzw. verringern, ohne die Lauffähigkeit beeinträchtigen bzw. die Führungen ändern zu müssen. Diese liegen nämlich an den von den freitragenden Enden entfernten Seiten des Speicherwagens, der an den Außenflächen der Säule geführt wird.

Eine Ausführung der Erfindung sieht vor, daß das Gegengewicht im Inneren der Säule geführt ist. Die erfindungsgemäße Säule bietet somit weiterhin die Möglichkeit der Integration aller wesentlichen Funktionselemente des Vertikalspeichers, z.B. auch zur Aufnahme eines benötigten Wartungsaufzuges. Dies gilt auch für die vorteilhaft am Säulenfuß angeordnete, für die Funktion des Vertikalspeichers wichtige, an sich bekannte Bandmittensteuerung.

Weitere Merkmale und Vorteile der Erfindung ergeben sich aus den Ansprüchen und der nachfolgenden Beschreibung, in der ein Ausführungsbeispiel des Gegenstandes der Erfindung näher erläutert ist. Es zeigen:
- Figur 1: die Vorderansicht eines Vertikalbandspeichers in Form einer Säule mit an deren Außenseite verfahrbarem Speicherwagen, teilgeschnitten dargestellt;
- Figur 2: den Vertikalbandspeicher gemäß Figur 1 in einer Seitenansicht; und
- Figur 3: eine Draufsicht der Figur 1 in vergrößertem Maßstab.

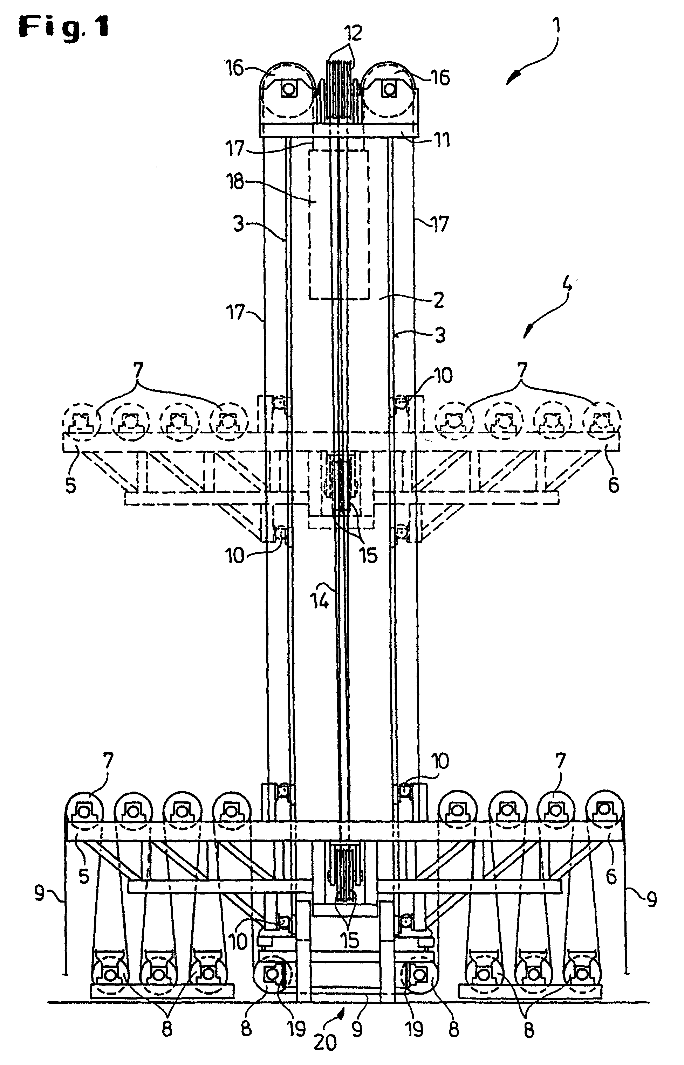

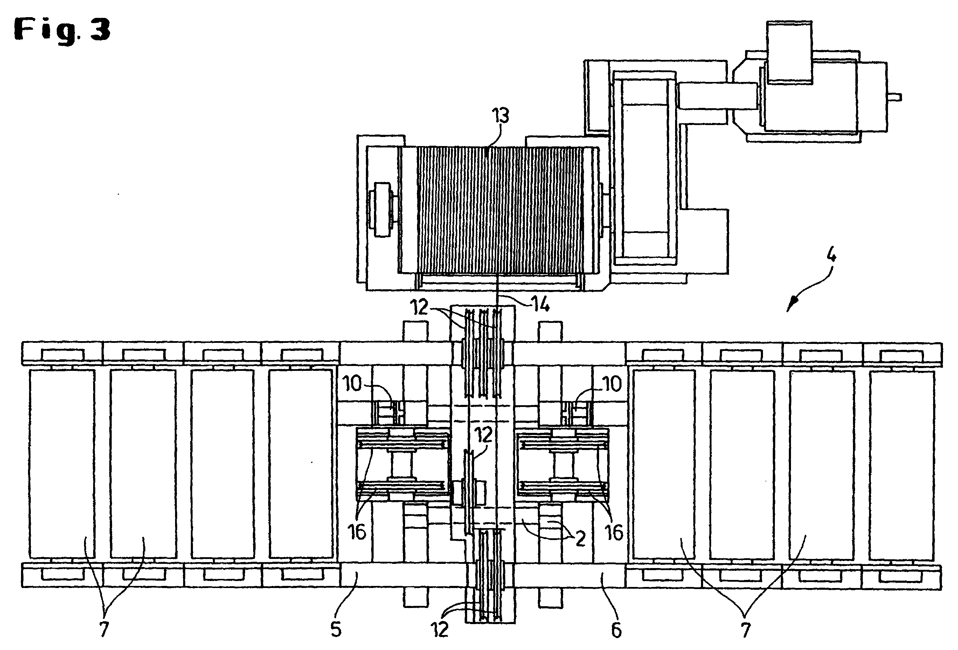

Ein in einer weiter nicht dargestellten Bandbehandlungsanlage angeordneter Vertikalbandspeicher 1 weist gemäß Figur 1 als Tragkonstruktion eine Säule 2 auf. An deren Außenflächen 3 sind in diametraler Anordnung zwei einen heb- und senkbaren Speicherwagen 4 bildende Ausladerrahmen 5 bzw. 6 vorgesehen. Diese sind mit - im dargestellten Ausführungsbeispiel - jeweils vier Umlenkrollen 7 versehen, über die im Zusammenspiel mit stationären bodenseitigen Umlenkrollen 8 ein zu speicherndes Band 9 in Schlingenform läuft. Der Speicherwagen 4 bzw. die beiden Ausladerrahmen 5 stützen sich über Führungen 10 (vgl. auch Figur 3) an den Außenflächen 3 der Säule 2 ab.

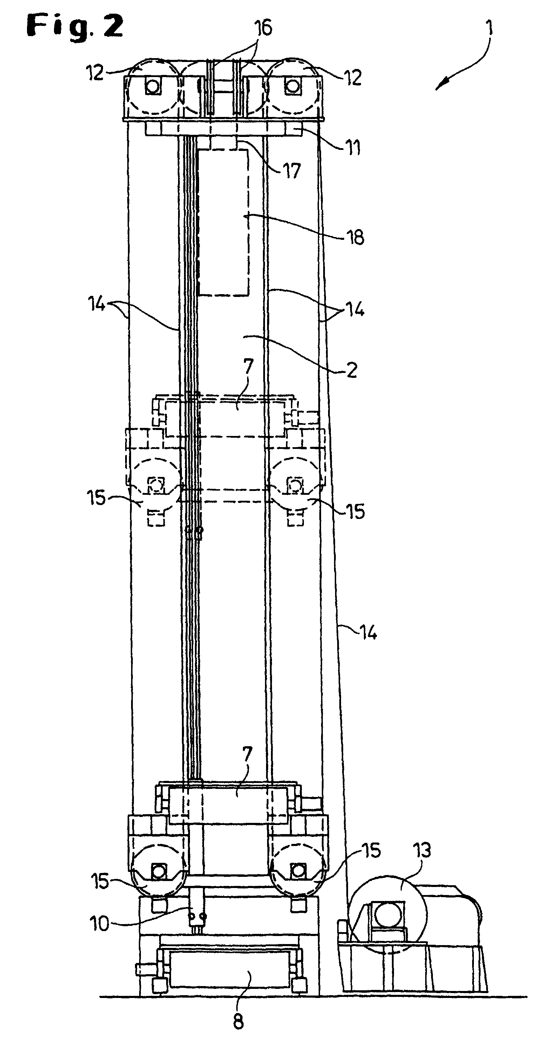

Auf einer kopfseitigen Plattform 11 der Säule 2 sind einerseits nach Art eines Flaschenzuges mehrere Seilrollen 12 für ein von einem motorgetriebenen Gewinde 13 (vgl. die Figuren 2 und 3) ausgehendes Seil 14 des Flaschenzuges angeordnet, die mit losen Umlenkrollen 15 des Speicherwagens 4 zusammenwirken. Durch Betätigen der Winde 13 wird der Speicherwagen 4 somit angehoben bzw. abgesenkt und zieht entsprechend dem gewünschten bzw. benötigten Speichervorrat mehr oder weniger große Schlingen; eine Zwischenposition - zur zeichnerischen Vereinfachung ohne die gezogenen Schlingen - des Speicherwagens 4 ist gestrichtelt in den Figuren 1 und 2 eingezeichnet. Andererseits sind auf der Plattform 11 Seilrollen 16 für ein das Eigengewicht des Speicherwagens 4 ausgleichendes, an Seilen 17 befestigtes, im Inneren der Säule 2 geführtes, in den Figuren 1 und 2 gestricheltes Gegengewicht 18 angeordnet. Die zur Funktion des Vertikalbandspeichers 1 benötigte Bandmittensteuerung 19 ist gemäß Figur 1 im bzw. am Säulenfuß 20 angeordnet.

Der die zentrale Säule 2 für den daran außen geführten Speicherwagen 4 besitzende Vertikalbandspeicher 1 kann in der Hersteller-Werkstatt komplett vorgefertigt sowie ausgerichtet werden, was seine spätere Montage erleichtert und verkürzt Abgesehen von der einfachen und platzsparenden Führung des Gegengewichtes 18 im Inneren der Säule 2 bieten die nach außen hin freiliegenden Ausladerrahmen 5,6 nicht nur eine ungehinderte, freie Zugänglichkeit zu den Umlenkrollen 7, sondern es ist weiterhin gleichzeitig auf einfache Weise möglich, die Speicherkapazität durch weiter ausladende Rahmen 5,6 des Speicherwagens 4 mit einer entsprechend größeren Anzahl von Umlenkrollen 7 zu erhöhen.

## Patentansprüche

1. Vertikalbandspeicher, umfassend eine Tragkonstruktion für einen über Seile nach Art eines Flaschenzuges heb- und senkbaren, mit einem Gegengewicht (18) versehenen Speicherwagen (4), der mit Umlenkrollen (7) ausgerüstet ist, die im Zusammenspiel mit fundamentseitigen stationären Umlenkrollen (8) das ein- und/oder auslaufende Band (9) umlenken und führen,
**dadurch gekennzeichnet,**
**daß** die Tragkonstruktion als Säule (2) und der Speicherwagen (4) als an deren Außenfläche (3) laufendes hinsichtlich der Kapazität des Vertikalspeichers unpassbares Ausladerfahrzeug ausgebildet ist.

2. Vertikalbandspeicher nach Anspruch 1,
**dadurch gekennzeichnet,**
**daß** das Gegengewicht (18) im Inneren der Säule (2) geführt ist.

3. Vertikalbandspeicher nach Anspruch 1 oder 2,
**gekennzeichnet durch**
eine am Säulenfuß (20) angeordnete Bandmittensteuerung(19).

4. Vertikalbandspeicher nach einem der Ansprüche 1 bis 3,
**gekennzeichnet durch**
einen diametrale Ausladerrahmen (5,6) aufweisenden Speicherwagen (4).

## Claims

1. Vertical belt store comprising a support construction for a storage carriage (4) which is provided with a counterweight (18) and raisable and lowerable by way of a cable in the manner of a block and pulley and which is equipped with deflecting rollers (7), which deflect and guide the incoming and/or outgoing belt (9) in co-operation with stationary deflecting rollers (8) at the base, **characterised in that** the support construction is constructed as a column (2) and the storage carriage (4) as an unloading vehicle which runs at the outer surface (3) thereof and is adaptable with respect to the capacity of the vertical store.

2. Vertical belt store according to claim 1, **characterised in that** the counterweight (18) is guided in the interior of the column (2).

3. Vertical belt store according to claim 1 or 2, **characterised by** a belt centre control (19) arranged at the column foot (20).

4. Vertical belt store according to one of claims 1 to 3, **characterised by** a storage carriage (4) having diametral unloading frames (5, 6).

## Revendications

1. Accumulateur vertical de bande, comprenant une construction support pour un chariot d'accumulation (4) pouvant être soulevé et abaissé via des câbles comme un palan, pourvu d'un contre-poids (18), équipé de poulies de déviation (7), qui dévient et guident la bande (9) entrante et/ou sortante en interaction avec les poulies de déviation (8) stationnaires des fondations, **caractérisé en ce que** la construction support est exécutée sous forme d'une colonne (2) et le chariot d'accumulation (4) comme un véhicule de déchargement adaptable en ce qui concerne la capacité de l'accumulateur vertical se déplaçant en sa surface extérieure (3).

2. Accumulateur vertical de bande selon la revendication 1, **caractérisé en ce que** le contre-poids (2) est guidé à l'intérieur de la colonne (2).

3. Accumulateur vertical de bande selon la revendication 1 ou 2, **caractérisé par** un dispositif de commande (19) du centre de la bande disposé au pied (20) de la colonne.

4. Accumulateur vertical de bande selon l'une quelconque des revendications 1 à 3, **caractérisé par** un chariot d'accumulation (4) présentant un cadre de déchargement (5, 6) diamétral.
